# EUROPEAN PATENT APPLICATION

(11) **EP 1 753 229 A2**
(43) Date of publication of application: **14.02.2007**
(21) Application number: 06014714.7
(22) Date of filing: 14.07.2006
(51) Int. Cl.: H04N 5/44, H04N 5/50

(54) **Method for searching a digital broadcasting channel in a digital broadcasting reception device**

(30) Priority: 11.08.2005 KR 20050073694
(71) Applicant: Samsung Electronics Co., Ltd., Yeongtong-gu Suwon-si, Gyeonggi-do (KR)
(72) Inventor: Yoon, Jun Samsung Electronics Co., Ltd.,, Suwon-si, Gyeonggi-do (KR); Yun, Sung-Ho Samsung Electronics Co., Ltd.,, Suwon-si, Gyeonggi-do (KR)
(74) Representative: Lang, Johannes

(57) **Abstract**

A method for searching a digital broadcasting channel in a digital broadcasting reception device for receiving digital broadcasting signals from local-area broadcasting stations that provide broadcasting services for specific areas. A location information code of each area and a list of digital broadcasting channels through which a service is possible in each area are mapped and stored. When a user requests a digital broadcasting channel search, a determination is made as to whether a location information code of an area where the digital broadcasting reception device is located matches one of location information codes stored on an area-by-area basis. When the matched location information code is present as a result of the determination, only broadcasting channels of the stored digital broadcasting channel list mapped to the matched location information code are searched, and the broadcasting channels through which broadcasting can be received are displayed.

## Description

### BACKGROUND OF THE INVENTION

### 1. Field of the Invention

The present invention generally relates to a method for searching a digital broadcasting channel in a digital broadcasting reception device, and more particularly, to a method for searching a digital broadcasting channel in a digital broadcasting reception device that can reduce the channel search time.

### 2. Description of the Related Art

Conventionally, digital broadcasting is a service system for providing users with high-quality images, high-quality sounds, and high-level services that can replace conventional analog broadcasting. Digital broadcasting is divided into satellite digital broadcasting and terrestrial digital broadcasting. Digital broadcasting reception devices include a mobile communication terminal, a receiver for use in a vehicle, and a receiver for use in the home, and can be mounted on portable terminals.

Satellite digital broadcasting is mainly used for mobile services. Through a portable receiver (e.g., a mobile phone or a personal information terminal) or a vehicle receiver, a multichannel/multimedia broadcast can be watched at any place and any time.

Terrestrial digital broadcasting, derived from digital audio broadcasting (DAB), provides television broadcasting, radio broadcasting, and data broadcasting together using multiple channels in a concept of multimedia broadcasting for mobile reception using, for example, Very High Frequency (VHF) Channel 12 that is currently being emptied. Conventional terrestrial broadcasting service providers manage a service for a single analog channel. However, digital broadcasting service providers manage a service for multiple digital channels. This service is referred to as the ensemble service.

The terrestrial digital broadcasting system can transmit three ensembles through one VHF channel and can provide one video channel, two audio channels, and one data channel per ensemble. The terrestrial digital broadcasting system aims at free broadcasting for vehicles.

In terrestrial digital broadcasting, a wide-area broadcasting station provides a wide-band broadcasting service and a local-area broadcasting station provides a broadcasting service for a specific area (i.e., a local band).

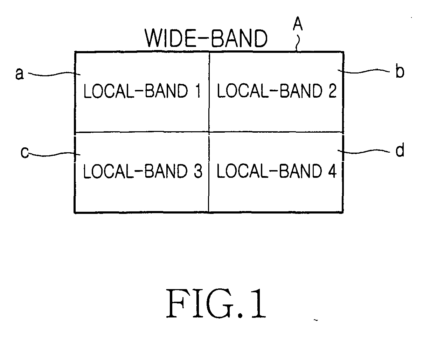

FIG. 1 schematically illustrates a wide-band broadcasting service and a local-band broadcasting service. The wide-band broadcasting service can be provided throughout an "A" area including "a", "b", "c", and "d" areas, and four local-band broadcasting services can be provided to the associated areas, respectively.

Therefore, a user can watch a digital broadcast provided in the "b" area using a digital broadcasting reception device after moving from the "a" area to the "b" area.

Because an ensemble, i.e., a broadcasting service, differs according to area in the case of the local-band broadcasting, the digital broadcasting reception device must first search broadcasting channels capable of being received in an associated area to receive and output a predetermined digital broadcast. In this case, there is a problem in that the digital broadcasting reception device requires a lot of search time, typically about 70 - 80 seconds, to search all channels.

That is, the user is inconvenienced because the digital broadcasting reception device requires a lot of time to search channels through which broadcasting can be received in an associated area.

### SUMMARY OF THE INVENTION

It is, therefore, an object of the present invention to provide a method that can reduce the amount of time required to search a digital broadcasting channel in a digital broadcasting reception device.

It is another object of the present invention to improve convenience for users by providing a method for efficiently searching a digital broadcasting channel in a digital broadcasting reception device.

In accordance with an aspect of the present invention, there is provided a method for searching a digital broadcasting channel in a digital broadcasting reception device for receiving digital broadcasting signals from local-area broadcasting stations that provide broadcasting services for specific areas, including mapping and storing a location information code of each area and a list of digital broadcasting channels through which a service is possible in each area; determining if a location information code of an area where the digital broadcasting reception device is located matches one of location information codes stored on an area-by-area basis, when a user requests a digital broadcasting channel search; and searching only broadcasting channels of a stored digital broadcasting channel list mapped to the matched location information code when the matched location information code is present as a result of the determination, and displaying the broadcasting channels through which broadcasting can be received.

In accordance with another aspect of the present invention, there is provided a method for searching a digital broadcasting channel in a digital broadcasting reception device, including entering a digital broadcasting channel search mode when the digital broadcasting reception device is powered on and searching digital broadcasting channels through which a service is possible in a current area; and entering an idle mode after the searched digital broadcasting channels are stored.

### BRIEF DESCRIPTION OF THE DRAWINGS

The above and other objects and advantages of the present invention will be more clearly understood from the following detailed description taken in conjunction with the accompanying drawings, in which:
FIG. 1 schematically illustrates a wide-band broadcasting service and a local-band broadcasting service;
FIG. 2 illustrates an exemplary structure of a digital broadcasting system in accordance with an embodiment of the present invention;
FIG. 3 is a block diagram illustrating a digital broadcasting reception device in accordance with an embodiment of the present invention;
FIG. 4 is a flowchart illustrating a process for searching a digital broadcasting channel in the digital broadcasting reception device in accordance with an embodiment of the present invention; and
FIG. 5 is a flowchart illustrating a process for searching a digital broadcasting channel in the digital broadcasting reception device in accordance with another embodiment of the present invention.

### DETAILED DESCRIPTION OF THE PREFERRED EMBODIMENTS

Preferred embodiments of the present invention will be described in detail herein below with reference to the accompanying drawings. In the following description, detailed descriptions of functions and configurations incorporated herein that are well known to those skilled in the art are omitted for clarity and conciseness.

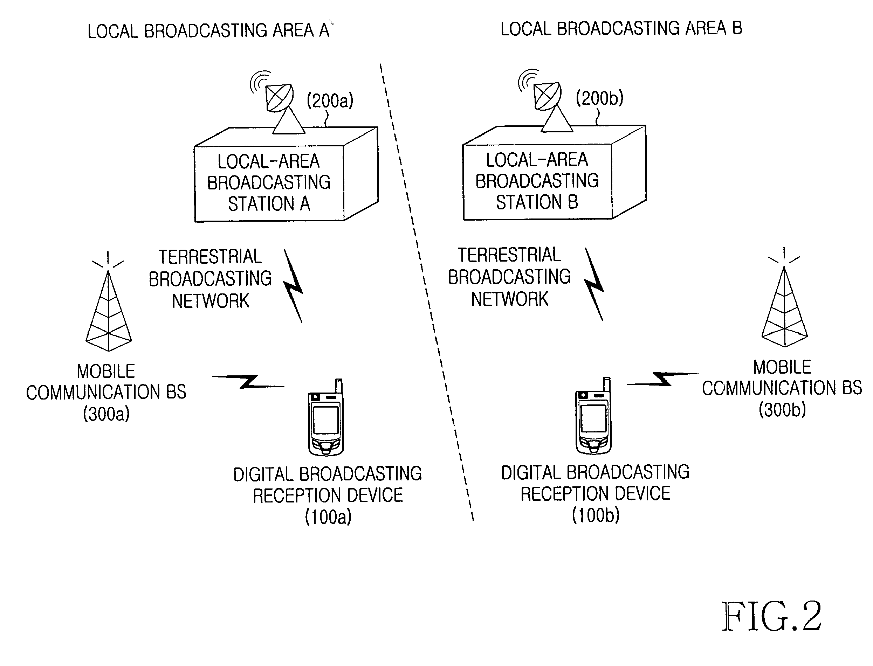

Referring to FIG. 2, the digital broadcasting system in accordance with the present invention includes local-area broadcasting stations 200a and 200b, digital broadcasting reception devices 100a and 100b, and mobile communication base stations (BSs) 300a and 300b. The local-area broadcasting stations 200a and 200b provide broadcasting services in specific areas (i.e., local broadcasting areas A and B). The digital broadcasting reception devices 100a and 100b receive digital broadcasting signals from the local-area broadcasting stations 200a and 200b and perform a mobile communication function. The mobile communication BSs 300a and 300b send location information codes of associated areas in response to requests of the digital broadcasting reception devices 100a and 100b.

The digital broadcasting reception devices 100a and 100b map and store a location information code of each area and a list of digital broadcasting channels through which a service is possible in each area, respectively. The location information code is a code indicating location information of a predetermined area. The digital broadcasting reception devices 100a and 100b can receive and store a location information code of each area and a list of digital broadcasting channels through which a service is possible in each area from the BSs 300a and 300b, the broadcasting stations 200a and 200b, or a special device (not illustrated). When the user requests a digital broadcasting channel search, the digital broadcasting reception devices 100a and 100b requests that the BSs 300a and 300b send location information codes of areas in which the digital broadcasting reception devices 100a and 100b are located. When receiving the requested location information codes, the digital broadcasting reception devices 100a and 100b determine if the received location information code matches one of prestored area-by-area location information codes, respectively.

If the matched location information code is present as a result of the determination, the digital broadcasting reception devices 100a and 100b search only broadcasting channels of the stored digital broadcasting channel list mapped to the location information code, and display to the user the searched broadcasting channels through which the digital broadcasting can be received.

In accordance with the above-described embodiment of the present invention, the amount of time required to search a digital broadcasting channel for receiving digital broadcasting in a changed area can be reduced even when a broadcasting service area is changed.

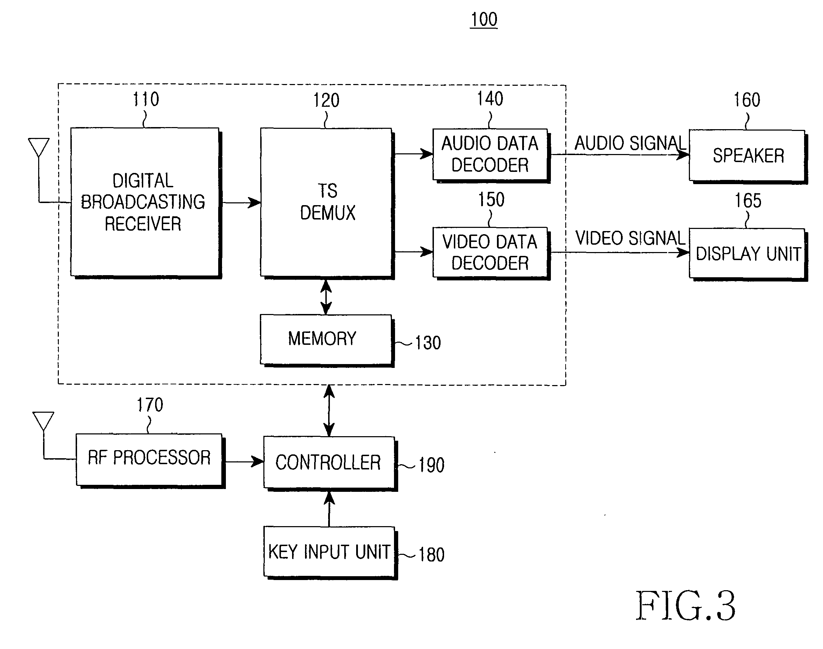

FIG. 3 is a block diagram illustrating a digital broadcasting reception device in accordance with of the present invention. The digital broadcasting reception device 100 includes a digital broadcasting receiver 110, a transport stream (TS) demultiplexer 120, a memory 130, an audio data decoder 140, a video data decoder 150, a speaker 160, a display unit 165, a radio frequency (RF) processor 170, a key input unit 180, and a controller 190. The digital broadcasting receiver 110 receives digital broadcasting data of a predetermined channel under control of the controller 190, and outputs the received digital broadcasting data to the controller 190. The TS demultiplexer 120 demultiplexes the received digital broadcasting data into an audio data stream, a video data stream, and a digital data stream.

The memory 130 stores various types of information necessary to control the operation of the digital broadcasting reception device 100 in accordance with the present invention. Moreover, the memory 130 stores a location information code of each area mapped to a list of digital broadcasting channels through which a service is possible in each area. In this case, it is preferred that the memory 130 stores a location information code of each area and a list of digital broadcasting channels through which a service is possible in each area in the form of a table.

The audio data decoder 140 receives the audio data stream from the TS demultiplexer 120, decodes the received audio data stream into an analog audio signal, and outputs the analog audio signal to the speaker 160.

The video data decoder 150 receives the video data stream from the TS demultiplexer 120, decodes the received video data stream into an analog video signal, and outputs the analog video signal to the display unit 165. The speaker 160 and the display unit 165 serve as output units in the digital broadcasting reception device 100.

It is preferred that the display unit 165 displays various types of display data generated from the digital broadcasting reception device 100 and is preferably configured by a liquid crystal display (LCD) capable of sufficiently supporting a resolution of the digital broadcasting data. When the LCD is implemented by a touch screen system, the display unit 165 can operate as an input unit.

Under control of the controller 190, the RF processor 170 is responsible for transmitting and receiving voice data, text data, video data, and control data. For this, the RF processor 170 is provided with an RF transmitter (not illustrated) for up converting and amplifying a frequency of a signal to be transmitted, and an RF receiver (not illustrated) for low noise amplifying and down converting a received signal. On the other hand, the RF processor 170 may be provided with a modulator-demodulator (MODEM) including a transmitter for encoding and modulating the signal to be transmitted, and a receiver for demodulating and decoding the received signal, although they are not illustrated in FIG. 1.

The key input unit 180 receives a user's manipulation signal such as a key input, voice input, or so on and outputs the received signal to the controller 190. Moreover, the key input unit 180 can set a key for a digital broadcasting output request.

The controller 190 (e.g., a mobile station modem (MSM)) controls the overall operation of the digital broadcasting reception device 100 in accordance with the present invention. Moreover, the controller 190 maps a location information code of each area and a list of digital broadcasting channels through which a service is possible in each area and stores a result of the mapping in the memory 130.

When the user requests a digital broadcasting channel search, the controller 190 sends a request for a location information code of the current area to a BS through the RF processor 170. When the location information code is received from the BS, the controller 190 determines if the received location information code matches a location information code stored in the memory 130.

If the received location information code matches a location information code stored in the memory 130 as a result of the determination, the controller 190 detects a stored digital broadcasting channel list mapped to the matched location information code from the memory 130. Subsequently, the controller 190 controls the digital broadcasting receiver 110 to search only broadcasting channels of the detected digital broadcasting channel list. The controller 190 then displays broadcasting channels capable of receiving digital broadcasting on the display unit 165 as a result of the search.

On the other hand, the digital broadcasting reception device 100 can search a digital broadcasting channel using the following method without additionally storing a location information code of each area and a list of digital broadcasting channels through which a service is possible in each area. In this case, the controller 190 switches its operating mode to a digital broadcasting channel search mode without entering an idle mode when the digital broadcasting reception device 100 is powered on and booted.

After switching the operating mode to the digital broadcasting channel search mode, the controller 190 searches digital broadcasting channels through which a service is possible in the current area (i.e., the area where the digital broadcasting reception device 100 is currently located) and stores in advance the searched digital broadcasting channels in the memory 130. Subsequently, the controller 190 stops the digital broadcasting channel search mode and switches the operating mode to the idle mode.

When the user requests a digital broadcasting channel search, the controller 190 immediately displays the digital broadcasting channels stored in the memory 130 on the display unit 165 without performing a channel search, such that the user can immediately select a desired digital broadcasting channel.

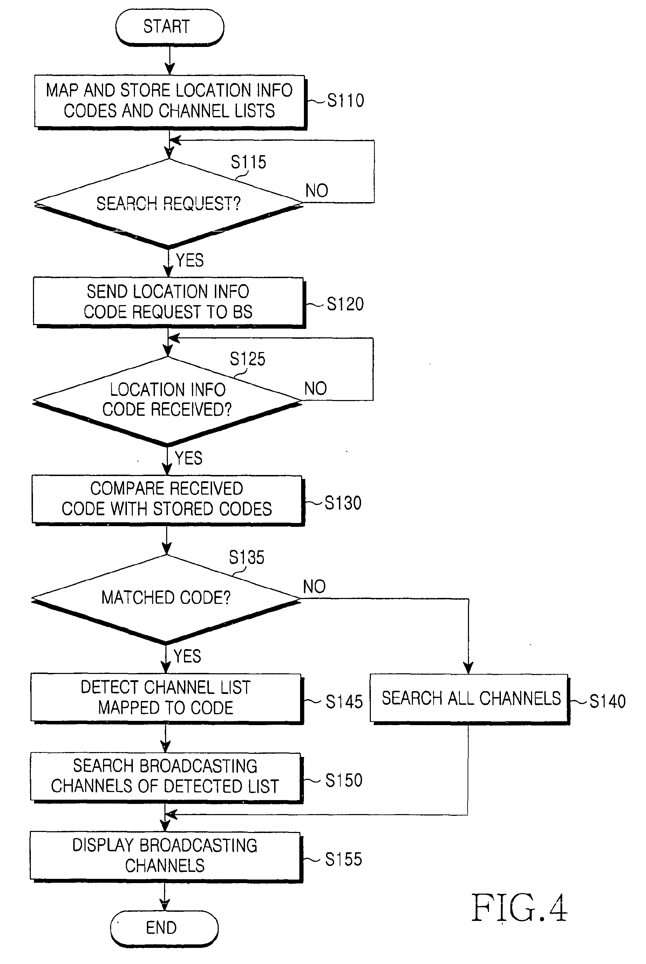

FIG. 4 is a flowchart illustrating a process for searching a digital broadcasting channel in the digital broadcasting reception device in accordance with the present invention.

Referring to FIGS. 3 and 4, the controller 190 maps a location information code of each area and a list of digital broadcasting channels through which a service is possible in each area and stores a result of the mapping in the memory 130. The location information code indicates location information of a predetermined area. For example, the location information code of "Seoul" is #1. Assuming that digital broadcasting channels through which a service is possible in "Seoul" corresponding to the location information code #1 are MBC TV1, KBS TV1, KBS TV2, and SBS TV1, the controller 190 maps #1 to the digital broadcasting channels through which the service is possible and stores a result of the mapping in the memory 130, in step S 110.

The controller 190 can receive a location information code of each area and a list of digital broadcasting channels through which a service is possible in each area from the BS or the broadcasting station illustrated in FIG. 2 or from a special server or device, and can store the location information code and the digital broadcasting channel list.

The controller 190 determines if the user requests a digital broadcasting channel search (Step S115). If the user requests the digital broadcasting channel search, the controller 190 controls the RF processor 170 to send a request for a location information code of the current area to the BS through a mobile communication network (Step S120). Here, the mobile communication network can be based on code division multiple access (CDMA), wideband-CDMA (W-CDMA), global system for mobile communication (GSM), etc.

When receiving the location information code from the BS in response to the request (Step S125), the controller 190 compares the received location information code with the area-by-area location information codes stored in the memory 130 (Step S130). The controller 190 determines if the received location information code matches a location information code stored in the memory 130 on the basis of a result of the comparison (Step S135).

If any location information code stored in the memory 130 does not match the received location information code, the controller 190 searches all channels to find channels through which broadcasting can be received in the area where the digital broadcasting reception device 100 is currently located (Step S140). Subsequently, the controller 190 displays digital broadcasting channels through which broadcasting can be received as a result of the search (Step S155).

On the other hand, if the received location information code matches a location information code stored in the memory 130 as a result of the detennination in step S135, the controller 190 detects a stored digital broadcasting channel list mapped to the matched location information code from the memory 130 (Step S145). The controller 190 then searches only digital broadcasting channels included in the detected digital broadcasting channel list (Step S150), and subsequently, the controller 190 displays the broadcasting channels through which digital broadcasting can be received on the display unit 165 (Step S 155).

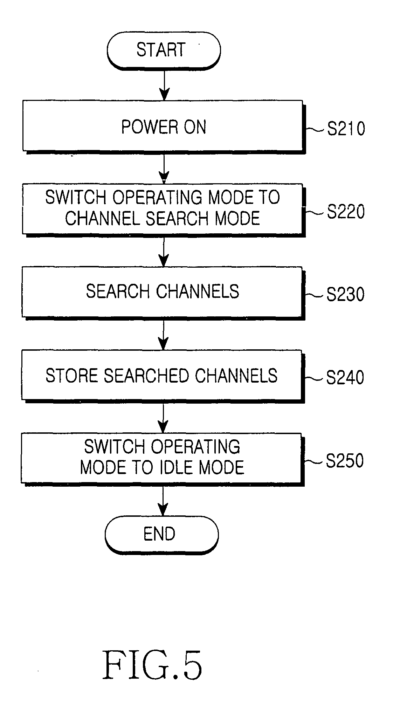

Alternatively, digital broadcasting reception device 100 can search a digital broadcasting channel using a process of FIG. 5 without additionally storing a location information code of each area and a list of digital broadcasting channels through which a service is possible in each area.

Referring to FIGS. 3 and 5, the controller 190 switches its operating mode to a digital broadcasting channel search mode without entering an idle mode (Step S220), when the digital broadcasting reception device 100 is powered on and booted (Step S210).

After switching the operating mode to the digital broadcasting channel search mode, the controller 190 searches digital broadcasting channels through which a service is possible in the current area (Step S230). The controller 190 stores the searched digital broadcasting channels in the memory 130 (Step S240) and switches the operating mode of the digital broadcasting reception device 100 to the idle mode (Step S250).

When the user requests the digital broadcasting channel search in the idle mode, the controller 190 can generate a list of the stored digital broadcasting channels without performing a special digital broadcasting channel search and can display the generated list on the display unit 165.

According to the process of FIG. 5, the digital broadcasting reception device searches digital broadcasting channels through which broadcasting can be received in an associated area and stores in advance the searched digital broadcasting channels when it is powered on. When the user requests the digital broadcasting channel search, the digital broadcasting reception device can immediately display the digital broadcasting channels stored in advance on the display unit 165 without performing a channel search.

It is assumed that at least two local-area broadcasting stations provide digital broadcasting services, the local-area broadcasting stations provide a second broadcasting service using a second frequency band, a wide-area broadcasting station covering broadcasting service areas of the local-area broadcasting stations provides a first broadcasting service in a first frequency band, and the digital broadcasting reception device 100 in accordance with the present invention can receive digital broadcasting signals through which a service is provided in the first and second frequency bands. In this case, the first frequency band is Band-III of 174 ~ 240 MHz and the second frequency band is L-Band of 1452 ~ 1492 MHz.

When the digital broadcasting reception device 100 desires to search all channels of Band-III and L-Band, the controller 190 can receive a pilot signal representing 3 or 4 channels radiated from broadcasting stations and can search sub-channels of the channels corresponding to the pilot signal. If an associated channel is not searched in a pilot signal, the controller 190 can search the associated channel in a pilot signal representing 3 or 4 channels radiated in the next step.

Because a specific region or country only uses a specific band and the number of pilot signals capable of being detected is "1", the search time can be reduced when only sub-channels configuring a pilot signal are searched.

As is apparent from the above description, the present invention can reduce the amount of time required to search a digital broadcasting channel in a digital broadcasting reception device and can improve convenience for users.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims, along with their full scope of equivalents.

## Claims

1. A method for searching a digital broadcasting channel in a digital broadcasting reception device for receiving digital broadcasting signals from local-area broadcasting stations that provide broadcasting services for specific areas, comprising the steps of:
mapping and storing a location information code of each area and a list of digital broadcasting channels through which a service is possible in each area;
determining if a location information code of an area where the digital broadcasting reception device is located matches one of location information codes stored on an area-by-area basis, when a user requests a digital broadcasting channel search; and
searching only broadcasting channels of a stored digital broadcasting channel list mapped to the matched location information code when the matched location information code is present as a result of the determination, and displaying the broadcasting channels through which broadcasting can be received.

2. The method of claim 1, wherein the determining step comprises :
receiving the location information code of the area where the digital broadcasting reception device is located from a base station (BS) of the area, when the user requests the digital broadcasting channel search; and
determining if the received location information code matches one of the location information codes stored on the area-by-area basis, when the location information code is received.

3. The method of claim 2, wherein the receiving step comprises the :
sending a request for the location information code of the area where the digital broadcasting reception device is located to the BS of the area when the user requests the digital broadcasting channel search, and receiving the location information code.

4. A method for searching a digital broadcasting channel in a digital broadcasting reception device, comprising the steps of:
entering a digital broadcasting channel search mode when the digital broadcasting reception device is powered on and searching digital broadcasting channels through which a service is possible in a current area; and
entering an idle mode after the searched digital broadcasting channels are stored.

5. The method of claim 4, further comprising the step of:
generating and displaying a list of the stored digital broadcasting channels when the user requests a digital broadcasting channel search in the idle mode.
